# EUROPEAN PATENT APPLICATION

(11) **EP 1 561 604 A1**
(43) Date of publication of application: **10.08.2005**
(21) Application number: 03754156.2
(22) Date of filing: 16.10.2003
(51) Int. Cl.: B60C 9/18, B60C 9/20, B60C 5/00

(54) **PNEUMATIC TIRE AND METHOD OF INSTALLING THE SAME**

(30) Priority: 30.10.2002 JP 2002315540
(71) Applicant: Bridgestone Corporation, Tokyo 104-8340 (JP)
(72) Inventor: KUWAYAMA, I., Bridgestone Corporation Techn. Ctr., Kodaira-shi, Tokyo 187-8531 (JP)
(74) Representative: Santarelli
(86) International application number: PCT/JP2003/013263
(87) International publication number: WO 2004/039609

(57) **Abstract**

The present invention is to provide a pneumatic tire in which a belt angle is optimized to improve the transversal rigidity of a tire while keeping the circumferential rigidity, thereby exerting a higher cornering performance and straight-running stability even when a side force is applied in the high-speed running.

A tire 1 has a pair of bead portions 2; a pair of sidewall portions 3 extending outward from the bead portion 2 in the tire's radial direction; a tread portion 4 extending between the both sidewall portions 3; and a carcass 6 having two plies 5a, 5b extending toroidally over the bead portions 2, sidewall portions 3 and tread portion 4. The tire 1 also has a main belt 9 interposed between a crown portion 7 of the carcass 6 and the tread portion 4. The main belt 9 has two belt layers 8a, 8b formed by rubber-coating reinforcing elements 10a, 10b extending slantly with respect to the tire's circumferential direction. The belt layers 8a, 8b constituting the main belt 9 are so stacked that reinforcing elements 10a, 10b extend slantly in the same direction with respect to the tire's circumferential direction.

## Description

### TECHNICAL FIELD

The present invention relates to a pneumatic tire having a belt for reinforcing a carcass, and especially to improvements of the cornering performance and the straight-running stability of such a tire in the high-speed running by optimizing a belt angle which is an angle of a reinforcing element constituting the belt with respect to the tire's circumferential direction.

### BACKGROUND ART

A running vehicle is consistently affected by a disturbance due to a road condition and a wind, and the disturbance has a great influence on a driveability of tires. Especially, while chances of running at the high speed have been increasing these days against such a background that a web of expressways has been developed and vehicles tend to be given higher power, the straight-running stability, which plays important role in the high-speed running, is largely affected by a side force generated on the tires due to the above-mentioned disturbance and steering operations.

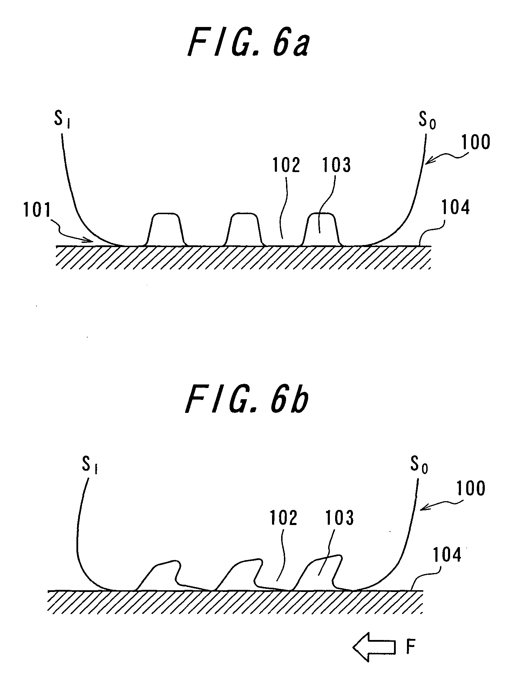

As shown in FIG. 6(a), a conventional tire 100 is provided with a land portion 102 and groove 103 on a tread portion 101. When the tire 100 is subjected to a side force F, the tire 100, as shown in FIG. 6(b), causes shearing deformation from the outside S_{O} to the inside S_{I} of the vehicle in the section in the tread's width direction. In this state, since a stepwise difference in rigidity exists between the land portion 102 and the groove 103, a part of the land portion 102 tends to be lifted from and thus not contact with the road surface. As a result, the cornering performance is reduced and a steering operation cannot give a stable control of the course, so that especially the straight-running stability in the high-speed running is below a sufficient level and has to be improved.

### DISCLOSURE OF THE INVENTION

It is an object of the present invention to provide a pneumatic tire in which a belt angle is optimized to improve the transversal rigidity of a tire while keeping the circumferential rigidity, thereby exerting a higher cornering performance and straight-running stability even when a side force is applied in the high-speed running.

To achieve the above-mentioned objects, a pneumatic tire according to the present invention comprises a pair of bead portions; a pair of sidewall portions extending outward from the bead portion in the tire's radial direction; a tread portion extending between the both sidewall portions; a carcass extending toroidally over the bead, sidewall and tread portions, the carcass having at least one ply formed by rubber-coating cords; and a main belt interposed between a crown portion of the carcass and the tread portion, the main belt having two belt layers formed by rubber-coating reinforcing elements extending slantly with respect to the tire's circumferential direction, characterized in that the belt layers constituting the main belt are so stacked that the reinforcing elements thereof extend slantly in the same direction with respect to the tire's circumferential direction.

As used herein, the term "slantly in the same direction" refers to a relation in which acute angles formed between the tire's circumferential direction and the reinforcing elements exist in the first and third quadrants or in the second and forth quadrants in Cartesian coordinates with the tire's circumferential and width directions being x-axis and y-axis, respectively.

Preferably, a ply angle which is an angle of the cords constituting the ply with respect to the tire's circumferential direction is within a range from 45 degrees to 90 degrees as measured at the acute angle side.

The carcass preferably has at least two plies stacked in a manner that the reinforcing elements thereof intersect one another.

A belt angle which is an angle of the reinforcing element constituting the belt layer with respect to the tire's circumferential direction is preferably within a range from 5 degrees to 85 degrees as measured at the acute angle side, and more preferably within a range from 25 degrees to 45 degrees.

The belt layers constituting the main belt preferably have mutually different belt angles.

An inner belt layer constituting an inner surface of the main belt preferably has a larger belt angle than that of an outer belt layer constituting an outer surface of the main belt, and more preferably by 5 degrees to 30 degrees.

The width of the inner belt layer is preferably larger than the width of the outer belt layer, and more preferably the width of the outer belt layer is within a range from 50% to 90% of the width of the inner belt layer.

At least one of the belt layers constituting the main belt is preferably so provided that the width center point thereof is offset from the tire's equatorial plane in the tire's width direction, and more preferably the offset belt layer has an offset distance within a range from 15% to 35% of the width of the offset belt layer.

As viewed in a position where the tire according to the present invention is equipped on a vehicle, the inner belt layer is preferably so provided that its width center point is offset from the tire's equatorial plane to outside of the vehicle, and the outer belt layer is so provided that its width center portion is offset from the tire's equatorial plane to inside of the vehicle.

The reinforcing elements constituting the belt layer are preferably monofilaments, and more preferably bundled cords formed by a plurality of monofilaments.

An outermost ply constituting the outer surface of the carcass and the inner belt layer are preferably so provided that the cords constituting the ply and the reinforcing element constituting the belt layer extend slantly in the same direction with respect to the tire's circumferential direction.

At least one auxiliary belt is preferably provided on the outer surface of the main belt over a region substantially covering the main belt, and the auxiliary belt is formed by helically winding a cord to arrange the wound portions generally parallel to the tire's circumferential direction and then rubber-coating the cord.

Another aspect of the present invention is a method of installing a pneumatic tire having the above mentioned configurations on a vehicle, wherein all of the tires is so installed on the vehicle that an extension line drawn from the reinforcing element of the belt layer constituting the main belt in the vehicle's traveling direction intersects with the width center line of the vehicle.

Yet another aspect of the present invention is a method of installing a pneumatic tire having the above-mentioned configurations on a vehicle, all of the tires is so installed on the vehicle that reinforcing elements of the belt layer constituting the main belt extend slantly in the same direction.

### BRIEF DESCRIPTION OF THE DRAWINGS

FIG. 1 is a sectional view of a pneumatic tire according to the present invention in the tire's width direction;

FIG. 2(a) illustrates an angle of a reinforcing element of a pneumatic tire according to the present invention with respect to the tire's circumferential direction;

FIG. 2(b) illustrates an angle of a reinforcing element of a conventional pneumatic tire with respect to the tire's circumferential direction;

FIG. 3 is a sectional view of another pneumatic tire according to the present invention in the tire's width direction;

FIG. 4 illustrates a method of installing a pneumatic tire according to the present invention;

FIG. 5 illustrates another method of installing a pneumatic tire according to the present invention;

FIG. 6(a) is a sectional view of a conventional tire in the tire's width direction showing in a state where the tire contacts with the road surface; and

FIG. 6(b) is a sectional view of the tire shown in FIG. 6(a) in the tire's width direction showing in a state where a side force F is applied on the tire and the tire contacts with the road surface.

### BEST MODE FOR CARRYING OUT THE INVENTION

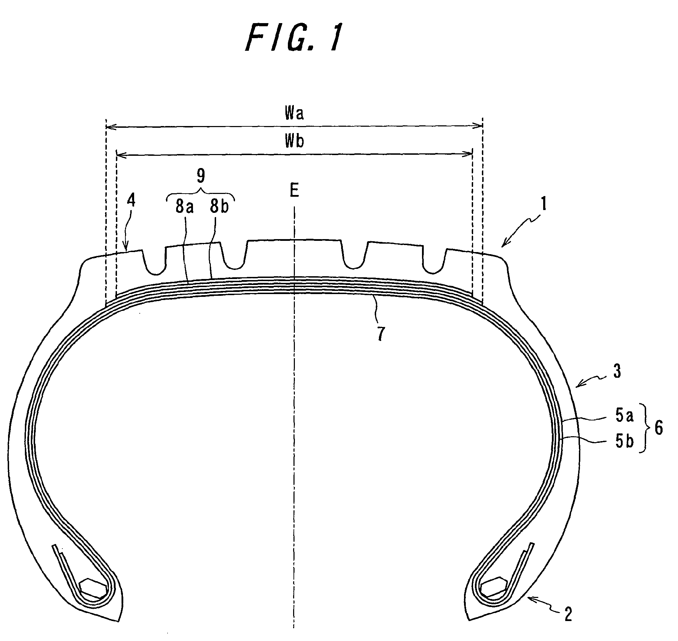

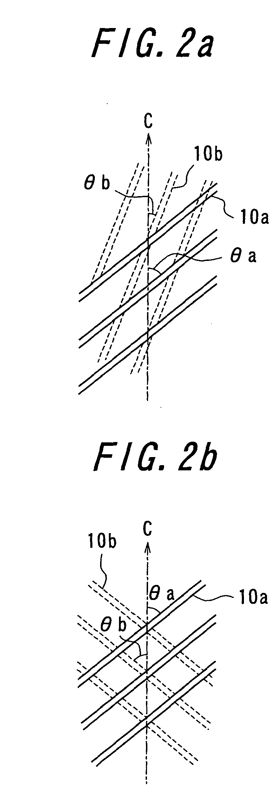

Hereinafter, illustrative embodiments of the invention will be described with reference to the attached drawings. FIG. 1 is a sectional view of a pneumatic tire according to the present invention in the tire's direction. FIG. 2(a) is a partially transparent top view of a belt layer constituting a main belt of a representative tire according to the present invention. FIG. 2(b) is a partially transparent top view of a belt layer constituting a main belt of a conventional tire.

A tire 1 shown in FIG. 1 has a pair of bead portions 2; a pair of sidewall portions 3 extending outward from the bead portion 2 in the tire's radial direction; a tread portion 4 extending between the both sidewall portions 3; and a carcass 6 extending toroidally over the bead portions 2, sidewall portions 3 and tread portion 4. The carcass 6 has at least one ply (two plies 5a, 5b in FIG. 1) formed by rubber-coating cords. The tire 1 also has a main belt 9 interposed between a crown portion 7 of the carcass 6 and the tread portion 4. The main belt 9 has two belt layers 8a, 8b formed by rubber-coating reinforcing elements extending slantly with respect to the tire's circumferential direction.

A constitutional feature of the present invention is, as shown in FIG. 2(a), the belt layers are so stacked that reinforcing elements 10a constituting the belt layer 8a as well as reinforcing elements 10b constituting the belt layer 8b extend slantly in the same direction with respect to the tire's circumferential direction C. More specifically, the belt layers are so stacked that belt angles θₐ, θ_{b} which are the angles of the reinforcing elements 10a, 10b, respectively, with respect to the tire's circumferential direction C as measured at the acute angle side exist in the first and third quadrants or in the second and forth quadrants (in the first and third quadrants in FIG. 2(a)) in Cartesian coordinates with the tire's circumferential and width directions being x-axis and y-axis, respectively.

In the next, it will be discussed, along with its operation, how the above-mentioned constitution has been adopted to the present invention.

The present inventor has examined a way of improving the cornering performance of a tire. As a result, it is found that, when a vehicle makes a turn, a steering angle is given to tires by a steering operation and a side force is applied to the tires so that, as mentioned above, the tire causes transversal shearing deformation in the section in the tread's width direction and a part of the land portion is lifted from and thus not contact with the road surface, which diminishes the cornering performance. In order to prevent the land portion from being lifted, it is effective to increase the belt angle θₐ, θ_{b} to enhance the transversal out-of-plane rigidity of the main belt 9. In a conventional tire, however, the reinforcing elements 10a, 10b extend slantly in different directions with respect to the tire's circumferential direction C, as shown in FIG. 2(b), so that such an increase of the belt angle results in a decrease of the circumferential rigidity and a deterioration of the driving performance. It is also considered that only either one of the belt angles θₐ, θ_{b} is enlarged to improve the transversal rigidity of the main belt 9 while maintaining the circumferential rigidity. In this case, however, the crossing angle between the reinforcing elements 10a, 10b becomes larger so that coupling deformation at the belt increases to suppress the shearing deformation at the tread portion. This increases a shearing strain between the layers and causes a phenomenon of remarkably reducing the durability. As a result, it is impossible to improve the transversal out-of-plane rigidity of the main belt 9. On the other hand, the inventor conceives that when the main belt 9 is made of two belt layers 8a, 8b and the belt layers are so stacked that the reinforcing elements 10a, 10b constituting the belt layers 8a, 8b, respectively, extend slantly in the same direction with respect to the tire's circumferential direction, the above-mentioned lifting at the groove portion can be prevented while controlling the circumferential rigidity according to applications, so that a higher cornering performance and straight-running stability can be obtained even in high-speed running. The present invention has been completed on the basis of these findings.

A ply angle which is an angle of the cords constituting the ply 5a, 5b with respect to the tire's circumferential direction C is preferably within a range from 45 degrees to 90 degrees as measured at the acute angle side. By adopting such a ply angle, the transversal rigidity of the carcass 6 as well as that of the main belt 9 is enhanced, so that the transversal rigidity of the whole tire 1 is also enhanced to give a further improved cornering performance and straight-running stability.

From the viewpoint of securing a riding quality, the carcass 6 preferably has at least two plies stacked in a manner that the reinforcing elements thereof intersect one another.

Further, belt angles θₐ, θ_{b} which are an angles of the reinforcing elements constituting the belt layers 8a, 8b with respect to the tire's circumferential direction are preferably within a range from 5 degrees to 85 degrees as measured at the acute angle side. This is because the transversal rigidity of the main belt 9 becomes insufficient when the belt angles θₐ, θ_{b} are less than 5 degrees, and because the circumferential rigidity becomes insufficient when they are more than 85 degrees. From the viewpoint of securing both of the transversal and circumferential rigidities in a well-balanced manner, the belt angles θₐ, θ_{b} are more preferably within a range from 25 degrees to 45 degrees as measured at the acute angle side.

The belt angles θₐ, θ_{b} of the belt layers 8a, 8b constituting the main belt 9 are preferably different with each other. This is because the belt angle of one layer is made larger to contribute to an improvement of the transversal rigidity while the belt angle of the other layer is made smaller to contribute to an improvement to the circumferential rigidity, and thereby further improving the cornering performance and the straight-running stability.

The belt angle θₐ of the inner belt layer 8a constituting an inner surface of the main belt 9 is preferably larger than the belt angle θ_{b} of the outer belt layer 8b constituting an outer surface of the main belt 9. Since the inner belt layer 8a is more responsible for the transversal rigidity of the main belt 9, the cornering performance and the straight-running stability are further improved by making the angle θₐ larger than the angle θ_{b}. From the viewpoint of preventing the coupling deformation at the main belt 9, the angle θₐ is more preferably larger than the angle θ_{b} by 5 degrees to 30 degrees.

The width Wₐ of the inner belt 8a layer is preferably larger than the width W_{b} of the outer belt layer 8b. Since the inner belt layer is more responsible for the transversal rigidity of the main belt 9, the cornering performance and the straight-running stability are further improved by making the width Wₐ larger. From the viewpoint of securing the circumferential rigidity of the main belt 9, the width W_{b} is more preferably within a range from 50% to 90% of the width Wₐ.

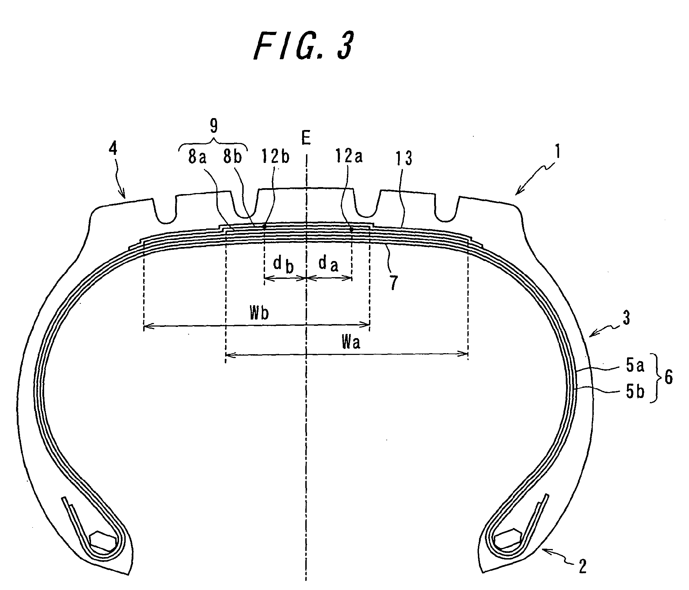

As shown in FIG. 3, at least one of the belt layers 8a, 8b constituting the main belt 9 (both of the belt layers 8a, 8b in FIG. 3) are preferably so provided that the width center points 12a, 12b are offset from the tire's equatorial plane E in the tire's width direction. By adopting the offset arrangement, the interlayer shearing strain at the belt end where the layers are not overlapped can be remarkably decreased to improve the durability. In this connection, the offset belt layers 8a, 8b more preferably have offset distances dₐ, d_{b}, respectively, each of which is within a range from 15% to 35% of the width Wₐ or W_{b} of the offset belt layer 8a or 8b, respectively, from the viewpoint of securing the rigidity of the whole main belt 9.

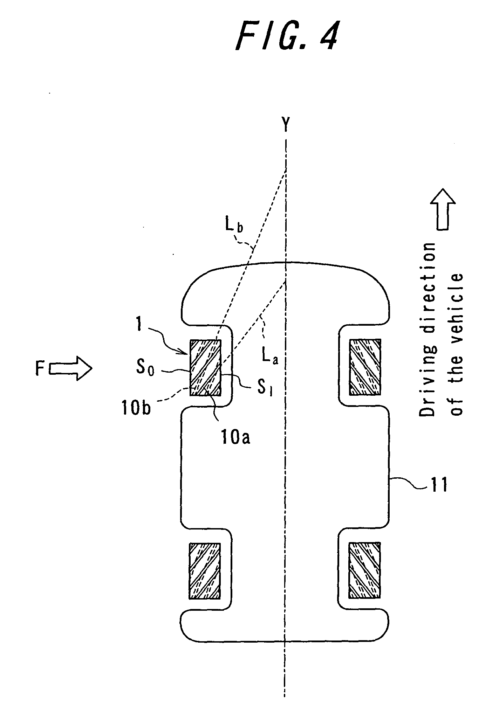

As viewed in a position where the tire 1 according to the present invention is equipped on a vehicle, the inner belt layer 8a is preferably so provided that its width center point 12a is offset from the tire's equatorial plane E to outside S_{O} of the vehicle, and the outer belt layer 8b is so provided that its width center portion 12b is offset from the tire's equatorial plane E to inside S_{I} of the vehicle. That is, the tire 1 shown in FIG. 4 is preferably installed to match the left side of the tire with the inside of the vehicle. This is because only the belt angle of the outer belt layer 8b can be reduced by installing the tire 1 in such a way, so that the level of strain at the ends of the main belt where nucleus of tire's breakdown tends to occur is reduced to realize both of the cornering performance and the durability of the tire in a well-balanced manner.

The reinforcing elements 10a, 10b constituting the belt layers 8a, 8b, respectively, are preferably monofilaments. Although an interlayer separation is more likely to occur when the belt layers are so stacked that the reinforcing elements 10a, 10c extend slantly in the same direction with respect to the tire's circumferential direction, such an interlayer separation can be prevented in this embodiment. This is because the reinforcing elements 10a, 10b are monofilaments so that penetration of rubber into the cord, which is often problematic if the cord is twisted, does not become a problem and adhesion between the cord and rubber is improved to delay a growth of a crack. It is more preferable that the reinforcing elements 10a, 10b are bundled cords formed by a plurality of monofilaments, since such a configuration enhances an effect of preventing the separation. This is because the thickness of the coating rubber between the cords can be secured and the strain along the cord can be reduced.

The outermost ply 5a constituting the outer surface of the carcass and the inner belt layer 8a are preferably so provided that the cords constituting the ply and the reinforcing element constituting the belt layer extend slantly in the same direction with respect to the tire's circumferential direction C. With such an arrangement, a relative angle between the cord and the reinforcing element is decreased to reduce the interlayer shearing strain, so that the transversal rigidity at the side to which the reinforcing elements 10a, 10b are slanted can be improved without diminishing the circumferential rigidity of the whole tire.

As shown in FIG. 4, at least one (one in FIG. 4) auxiliary belt 13, which is formed by helically winding a cord to arrange the wound portions generally parallel to the tire's circumferential direction C and then rubber-coating the cord, is preferably provided on the outer surface of the main belt 9 over a region substantially covering the main belt 9. By providing the auxiliary belt 13, a separation occurring from the ends of belt layers 8a, 8b can be effectively prevented.

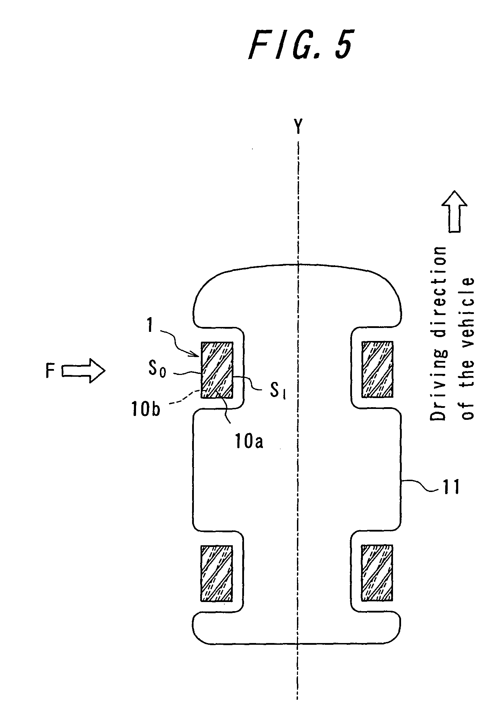

Next, a method of installing the above-mentioned pneumatic tire will be discussed with reference to FIGS. 4 and 5.

When a vehicle 11 shown in FIGS. 4 and 5 makes a turn, a side force F is applied on a tire 1 from outside S_{O} of the vehicle to inside S_{I} of the vehicle, as already mentioned above. Thus, the larger side force F acts on inside S_{I} of the outer-side tires in turning, i.e. the left-side tires in turning to the right and the right-side tires in turning to the left. The tire 1 having the above-mentioned configuration has the belt layers 8a, 8b in which reinforcing elements 10a, 10b extend slantly in the same direction with respect to the tire's circumferential direction C, and thus the tire is a so-called asymmetric tire. In this tire, when a steering angle is applied to the tire 1 due to a steering operation, the side force (cornering force) generated in different ways in the left side and the right side with the tire's equatorial plan as the center.

So, as shown in FIG. 4, when all of the tires 1 is so installed on the vehicle that extension lines La, Lb drawn along the vehicle's traveling from the reinforcing elements 10a, 10b of the belt layer constituting the main belt 9 direction intersect with the width center line Y of the vehicle, the tire 1 installed on the outer side in turning, which is subjected to a larger side force F, is in such a position that the side having higher transversal rigidity is at the inside S_{I} of the vehicle on which a larger side force F acts. As a result, even when the side force F acts on the tire 1 due to a steering operation, the shearing deformation of the tire 1 can be reduced to improve the cornering performance and the straight-running stability of the vehicle 11.

If the vehicle is steered to only one direction, for example, in the case of running an oval-shaped racing course, the acting direction of the side force F is constant. In this case, as shown in FIG. 5, when all of the tires 1 is so installed on the vehicle that reinforcing elements 10a, 10b of the belt layer constituting the main belt 9 extend slantly in the same direction, the side of tire 1 having higher transversal rigidity is at the inner side in turning on which a larger side force F acts. As a result, even when the side force F acts on the tire 1 due to a steering operation, the shearing deformation of the tire 1 can be reduced to improve the cornering performance and the straight-running stability of the vehicle 11.

Although illustrative embodiments of the present invention have been described above, variations and modifications may be made without departing from the scope of the invention as defined by the appended claims.

### EXAMPLES

Pneumatic tires according to the present invention were experimentally manufactured and their performances were evaluated. The details will be described below.

Examples 1 to 7 had the tire size of 235/45 ZR17 and the rib-like tread pattern. Each of them had a carcass consisted of two plies with the ply angle of 80 degrees and 110 degrees stacked in a manner that the cords of each ply intersected with each other (Examples 1 to 4), a carcass consisted of one ply with the ply angle of 80 degrees (Example 5), a carcass consisted of two stacked plies with the ply angle of 90 degrees (Example 6), or a carcass consisted of one ply with the ply angle of 90 degrees (Example 7). The reinforcing elements of them were bundled cords formed by a plurality of monofilaments. Examples 1 to 7 also had parameters shown in Table 1.

For the purpose of comparison, a tire (Conventional Example) was also experimentally manufactured. Conventional Example was identical to Examples 1 to 4 in the tire size, tread pattern, carcass and reinforcing elements, and had parameters shown in Table 1.

### (Experiment 1)

The above-mentioned test tires were equipped on standard rims (8JJ) specified by JATMA to form tire/wheel assemblies. Then, air pressure of 235kPa (relative pressure) was applied and the cornering performance, straight-running stability and durability were evaluated. The cornering performance was evaluated by the following way: a load (450 kgf) which is 70% of the maximum load (650kgf) specified by JATMA was applied to these tire/wheel assemblies on a flat plane; the tires were set on a flat belt type testing machine; the tire were driven at 50 km/h; a deviation between the direction to which the tires were driven and the rotating plane of the testing machine was 1 degree; and the side force acting on the tires were measured. The results are shown in Table 1. The results of the cornering performance shown in Table 1 are represented by an index value of measured side forces, provided that the side force acting on Conventional Example (1771 N) is 100. The larger the index value is, the better the cornering performance is.

The driveability and straight-running stability were evaluated in the following way: four sets of tire/wheel assemblies of each example were used and were installed on a rear-wheel-drive vehicle of 2500 cc displacement; two passengers were on board; the vehicle were driven on a test course having both of left-hand and right-hand curves; a professional driver sensory evaluated the feeling during the straight running, lane-changing running and the like at 60 to 120 km/h. In this experiment, Examples 1 to 7 were installed according to the way shown in FIG. 4. In addition, Example 3 was so installed that the inner belt layer was offset to inside of the vehicle. In order to evaluate the durability, the tires after being conducted a running test for the straight-running stability evaluation were disassembled and the total length of the separations occurred at the belt ends was visually measured. The results are shown in Table 1. The results of the straight-running stability and durability in Table 1 are represented by deviations of the index values with the results of Conventional Example being standard. The deviation is positive and larger, the driveability, straight-running stability and durability are better.

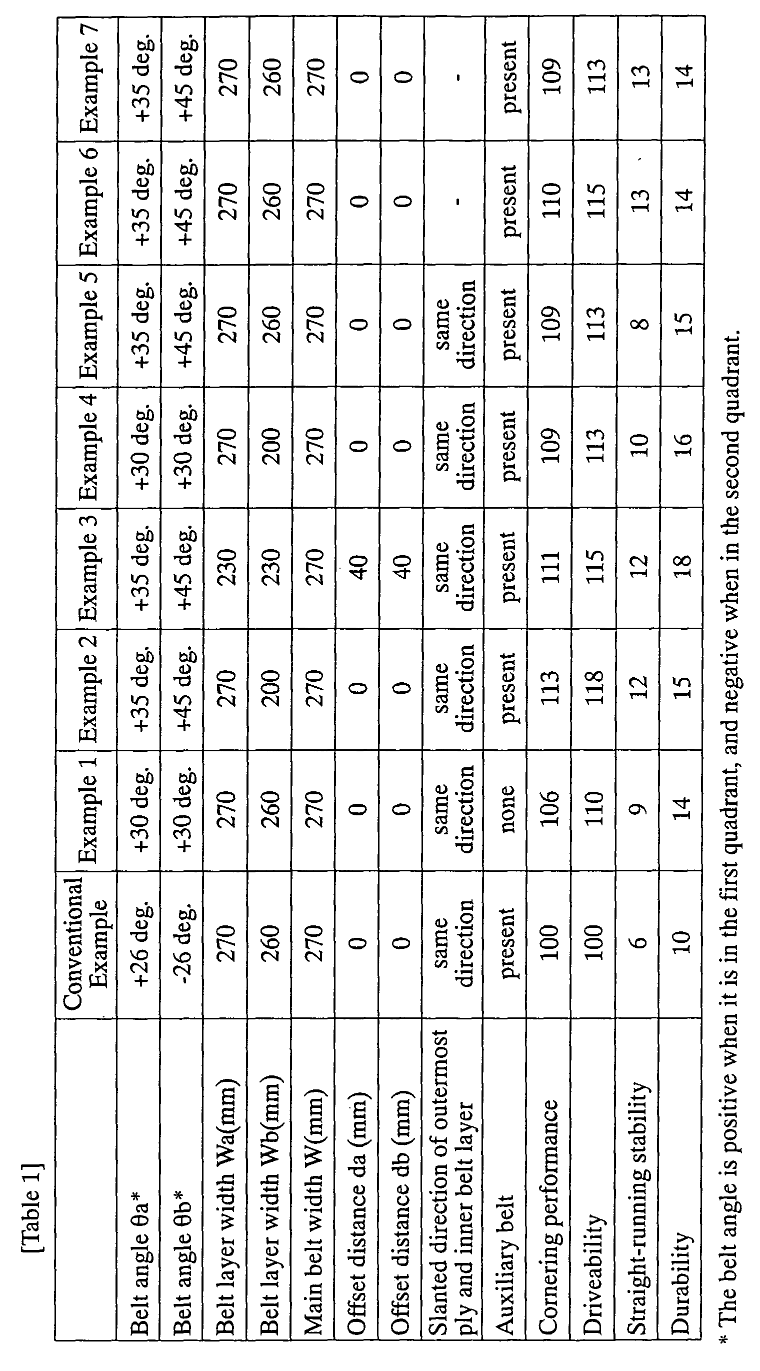

As appreciated from the results shown in Table 1, all of Examples 1 to 7 has the superior cornering performance, driveability, straight-running stability and durability.

### (Experiment 2)

For sets of tire/wheel assemblies of each of Examples 2 and 3 and Conventional Example were installed on a rear-wheel-drive vehicle of 2500 cc displacement. Two passengers were on board and the vehicle was driven on an oval course having only right-hand curves. A professional driver sensory evaluated the driveability and straight-running stability during the straight-running, lane-changing running and the like at 60 to 120 km/h. In this experiment, Examples 2 and 3 were installed according to the way shown in FIG. 5. In addition, Example 3 was so installed that the inner belt layer was offset to inside of the vehicle. In order to evaluate the durability, the tires after being conducted a running test for the straight-running stability evaluation were disassembled and the total length of the separations occurred at the belt ends was visually measured. The results are shown in Table 2. The results of the straight-running stability and durability in Table 2 are represented by deviations of the index values with the results of Conventional Example being standard. The deviation is positive and larger, the driveability, straight-running stability and durability are better.

**[Table 2]**

| | Conventional Example | Example 2 | Example 3 |
|---|---|---|---|
| Driveability | 100 | 123 | 118 |
| Straight-running stability | 6 | 10 | 10 |
| Durability | 10 | 14 | 17 |

As appreciated from the results shown in Table 2, Examples 2 and 3 have the superior driveability, straight-running stability and durability.

### INDUSTRIAL APPLICABILITY

According to the present invention, it is possible to provide a pneumatic tire in which a belt angle is optimized to improve the transversal rigidity of a tire while keeping the circumferential rigidity, thereby exerting a higher cornering performance and straight-running stability even when a side force is applied in the high-speed running.

## Claims

1. A pneumatic tire, comprising a pair of bead portions; a pair of sidewall portions extending outward from the bead portion in the tire's radial direction; a tread portion extending between the both sidewall portions; a carcass extending toroidally over the bead, sidewall and tread portions, the carcass having at least one ply formed by rubber-coating cords; and a main belt interposed between a crown portion of the carcass and the tread portion, the main belt having two belt layers formed by rubber-coating reinforcing elements extending slantly with respect to the tire's circumferential direction, **characterized in that** the belt layers constituting the main belt are so stacked that the reinforcing elements thereof extend slantly in the same direction with respect to the tire's circumferential direction.

2. The pneumatic tire according to claim 1, wherein a ply angle which is an angle of the cords constituting the ply with respect to the tire's circumferential direction is within a range from 45 degrees to 90 degrees as measured at the acute angle side.

3. The pneumatic tire according to claim 1 or2, wherein the carcass has at least two plies stacked in a manner that the reinforcing elements thereof intersect one another.

4. The pneumatic tire according to any one of claims 1 to 3, wherein a belt angle which is an angle of the reinforcing element constituting the belt layer with respect to the tire's circumferential direction is within a range from 5 degrees to 85 degrees as measured at the acute angle side.

5. The pneumatic tire according to any one of claims 1 to 4, wherein the belt layers constituting the main belt have mutually different belt angles.

6. The pneumatic tire according to any one of claims 1 to 5, wherein an inner belt layer constituting an inner surface of the main belt has a larger belt angle than that of an outer belt layer constituting an outer surface of the main belt.

7. The pneumatic tire according to claim 6, wherein the belt angle of the inner belt layer is larger than the belt angle of the outer belt layer by 5 degrees to 30 degrees.

8. The pneumatic tire according to any one of claims 1 to 7, wherein the width of the inner belt layer is larger than the width of the outer belt layer.

9. The pneumatic tire according to claim 8, wherein the width of the outer belt layer is within a range from 50% to 90% of the width of the inner belt layer.

10. The pneumatic tire according to any one of claims 1 to 9, wherein at least one of the belt layers constituting the main belt is so provided that the width center point thereof is offset from the tire's equatorial plane in the tire's width direction.

11. The pneumatic tire according to claim 10, the offset belt layer has an offset distance within a range from 15% to 35% of the width of the offset belt layer.

12. The pneumatic tire according to claim 10 or 11, wherein, under the condition that the tire is equipped on a vehicle, the inner belt layer is so provided that its width center point is offset from the tire's equatorial plane to outside of the vehicle, and the outer belt layer is so provided that its width center portion is offset from the tire's equatorial plane to inside of the vehicle.

13. The pneumatic tire according to any one of claims 1 to 12, wherein the reinforcing elements constituting the belt layer are monofilaments.

14. The pneumatic tire according to claim 13, wherein the reinforcing elements constituting the belt layer are bundled cords formed by a plurality of monofilaments.

15. The pneumatic tire according to any one of claims 1 to 14, wherein an outermost ply constituting the outer surface of the carcass and the inner belt layer are so provided that the cords constituting the ply and the reinforcing element constituting the belt layer extend slantly in the same direction with respect to the tire's circumferential direction.

16. The pneumatic tire according to any one of claims 1 to 15, wherein at least one auxiliary belt is provided on the outer surface of the main belt over a region substantially covering the main belt, the auxiliary belt being formed by helically winding a cord to arrange the wound portions generally parallel to the tire's circumferential direction and then rubber-coating the cord.

17. A method of installing a pneumatic tire according to any one of claims 1 to16 on a vehicle, wherein all of the tires is so installed on the vehicle that an extension line drawn from the reinforcing element of the belt layer constituting the main belt in the vehicle's traveling direction intersects with the width center line of the vehicle.

18. A method of installing a pneumatic tire according to any one of claims 1 to 16 on a vehicle, all of the tires is so installed on the vehicle that reinforcing elements of the belt layer constituting the main belt extend slantly in the same direction.
